# EUROPEAN PATENT SPECIFICATION

(11) **EP 1 400 380 B1**
(45) Date of publication and mention of the grant of the patent: **24.11.2010**
(21) Application number: 03077952.4
(22) Date of filing: 18.09.2003
(51) Int. Cl.: B60G 11/08

(54) **Vehicle wheel suspension with transverse leaf spring**
Fahrzeugradaufhängung mit Querblattfeder
Suspension de roue de véhicule à ressort à lame transversale

(30) Priority: 18.09.2002 NL 1021480; 21.05.2003 NL 1023483
(43) Date of publication of application: 24.03.2004
(73) Proprietor: PD&E Automotive B.V., 5708 HN Helmond (NL)
(72) Inventor: Deelen, Cornelis Josephus Adrianus, 5712 JR Someren (NL)
(74) Representative: Verhees, Godefridus Josephus Maria

(56) References cited:
- EP-A- 0 213 367
- EP-A- 0 916 525
- US-A- 4 313 618
- US-B1- 6 382 649

## Description

### BACKGROUND OF THE INVENTION:

### Field of the invention

The invention relates to a wheel suspension system for a vehicle, comprising a supporting arm comprising a leaf spring which, if the wheel suspension system is built in a vehicle, is provided with a top and a bottom main surface, an axle carrier made from one piece together with the leaf spring and situated on the side of the top main surface at an angle with respect to the top main surface, which wheel suspension system, furthermore, comprises a guide, which is attached to the axle carrier and is situated on the side of the leaf spring's top main surface at an angle with respect to the top main surface and at a distance vertically from where the axle carrier is attached to the leaf spring whereby the flexibility of the leaf spring and axle carrier which are one piece is greater at at least one spot in at least one direction than it is at the parts adjoining that spot. A stub axle, for example, can be mounted on the axle carrier for supporting on bearings a non-driven wheel, or the axle carrier can be provided with an opening, for example, for one or more bearings for supporting an axle of a wheel which may or may not be driven. In addition to the above-mentioned supporting arm, the wheel suspension system may comprise additional elements which are coupled to the axle carrier.

### Prior art

Such a wheel suspension system is known from EP-A-0 213 367. The size of the cross-section of the leaf spring of this known wheel suspension system varies over its length in order to have a different rigidity at different places.

### Summary of the invention

An objective of the invention is to provide a wheel suspension system of the type described in the preamble in which the supporting arm can be given additional desirable properties, for example, steering properties, without having to add extra hinges or joints. To this end, the wheel suspension system according to the invention is **characterized in that** the flexibility of the above-mentioned part has a different value in various directions at the above-mentioned spot.

The flexibility should be adjusted in such a way that; when compressed, steering of the wheels is possible. Preferably the above-mentioned part at the above-mentioned spot is strong with regard to bending and weak with regard to torsion. Also the cross-section of the leaf spring may vary in shape over its length in order to adjust its properties at particular spots.

A further embodiment of the wheel suspension system according to the invention is **characterized in that** at and/or near where the axle carrier is attached to the leaf spring, the flexibility of the leaf spring and the axle carrier which are one piece, is greater than it is at the adjoining parts. Because of this, any desired rigidity of the attachment of the supporting arm to the axle carrier can be obtained in order to acquire a desired suspension characteristic. This other rigidity can preferably be attained by making the part thinner at and/or near the spot where the axle carrier is attached to the leaf spring than the adjoining parts by that spot or by building in a portion which is weak with respect to torsion.

Preferably, the axle carrier comprises a plate, and the guide and the plate are at angles of 45° to 90° with respect to the leaf spring's main surfaces. Furthermore, the supporting arm is preferably situated at an angle of less than 45° with respect to the axle.

Still a further embodiment of the wheel suspension system according to the invention is **characterized in that** the main surfaces of a part of the leaf spring are at an angle to the rest of the main surfaces in order to obtain flexibility in a direction different than that of the rest of the leaf spring. Because of this, the supporting arm can be given additional desirable properties, for example, steering properties, without having to add extra hinges or joints.

In order to adjust the rigidity of the wheel suspension system in a direction, again a further embodiment of the wheel suspension system is **characterized in that** the width of the supporting arm varies lengthwise. Preferably, the width of the supporting arm increases lengthwise starting from the axle carrier, as a result of which the rigidity of the supporting arm increases widthwise.

Furthermore, the axle carrier may comprise a mounting piece for attaching an additional part, for example, the guide, of the wheel suspension system to the axle carrier, which mounting piece is made from one piece along with the axle carrier and the leaf spring. Moreover, a steering rod can be connected to the axle carrier.

The invention also relates to a vehicle provided with a wheel suspension system according to the invention.

An embodiment of the vehicle is **characterized in that** the leaf spring, on the end situated opposite the axle carrier, is attached at its main surface to a mounting face on the vehicle's body or subframe.

### Brief description of the drawings

The invention will be elucidated more fully below on the basis of drawings in which embodiments of the wheel suspension system according to the invention are shown. In these drawings:
Figure 1 shows a front view of a first embodiment of the wheel suspension system according to the invention;
Figure 2 shows a view from above and a partial cross-section of the wheel suspension system shown in figure 1;
Figure 3 shows a side view of the wheel suspension system shown in figure 1;
Figure 4 shows a view from above of a supporting arm and axle carrier which are one piece;
Figure 5 shows a front view and a partial cross-section of the part shown in figure 4;
Figure 6 shows a side view of the part shown in figure 4;
Figure 7 shows a side view of a stub axle plate of the wheel suspension system;
Figure 8 shows a horizontal cross-section of the stub axle plate shown in figure 7;
Figure 9 shows the attachment of the wheel suspension system's leaf spring to a vehicle; and
Figure 10 shows a second embodiment of the wheel suspension system according to the invention.

### Detailed description of the drawings

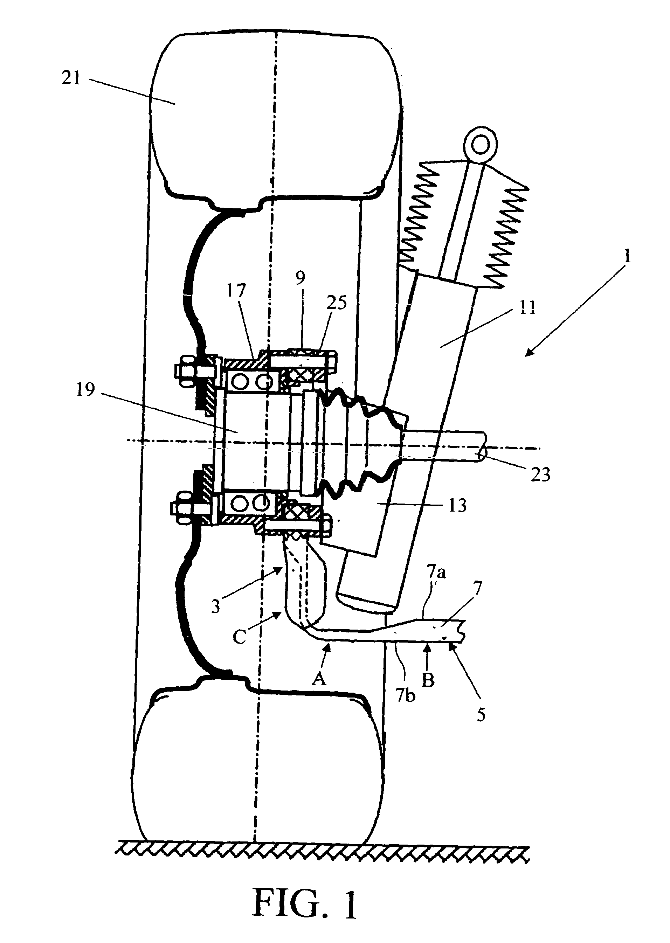

In figures 1, 2 and 3 a first embodiment of the wheel suspension system according to the invention is shown in a front view, a view from above and a side view respectively. The wheel suspension system 1 has an axle carrier 3 and a supporting arm 5, which comprises a leaf spring 7. The leaf spring 7 has a top and a bottom main surface 7a, 7b, and is made from one piece together with the axle carrier 3, and the axle carrier is situated on the upper side of the leaf spring 7 at an angle with respect to the leaf spring 7.

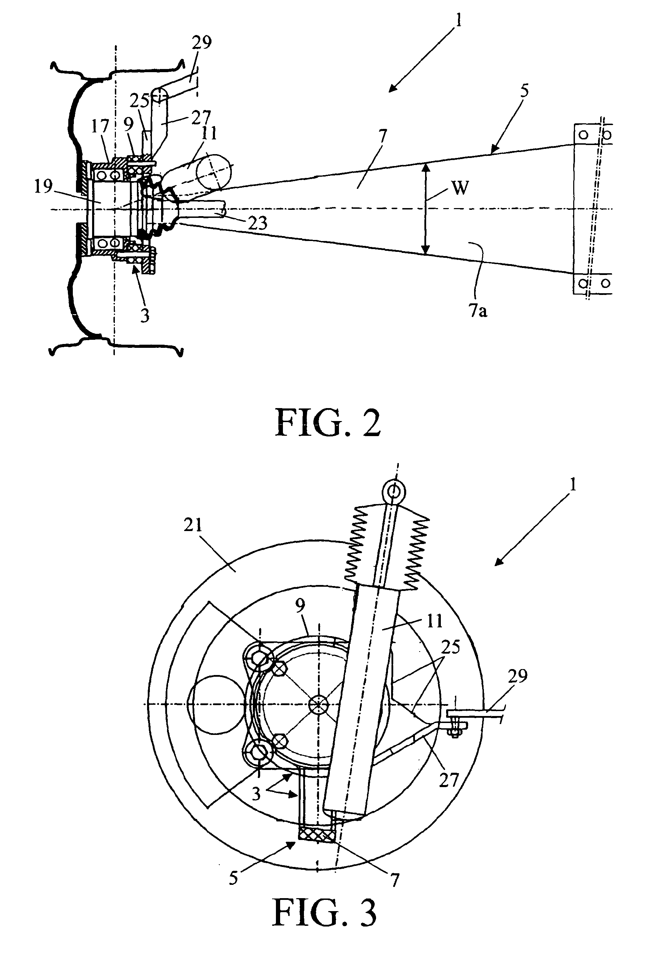

The axle carrier 3 has a plate 9 and between this plate and the leaf spring 7 the flexibility of the leaf spring and axle carrier, which are one piece, is greater than it is at the adjoining parts because here (A) that part is thinner than the adjoining parts by that spot (B, C), see figure 2. Furthermore, the strength of the leaf spring 7 increases in the direction away from the axle carrier 3 because the width W of the leaf spring 7 increases starting from the axle carrier 3.

Moreover, the wheel suspension system 1 has a guide 11, which is a shock absorber and is connected, by means of a mounting piece 13, see figure 1, to the plate 9 of the axle carrier 3 at a distance from the leaf spring 7. The guide 11 is also situated on the upper side of the leaf spring 7 and is at an angle of 70° to 80° with respect to the leaf spring.

A hub 17 is attached to the plate 9 of the axle carrier 3 in which an axle 19 is supported on bearings and is parallel to the supporting arm 5. A wheel 21 is attached to the axle 19 and a drive shaft 23 can be coupled to the axle 19. Furthermore, a stub axle plate 25, on which there is an arm 27 that is connected to a steering rod 29, is attached to the plate 9.

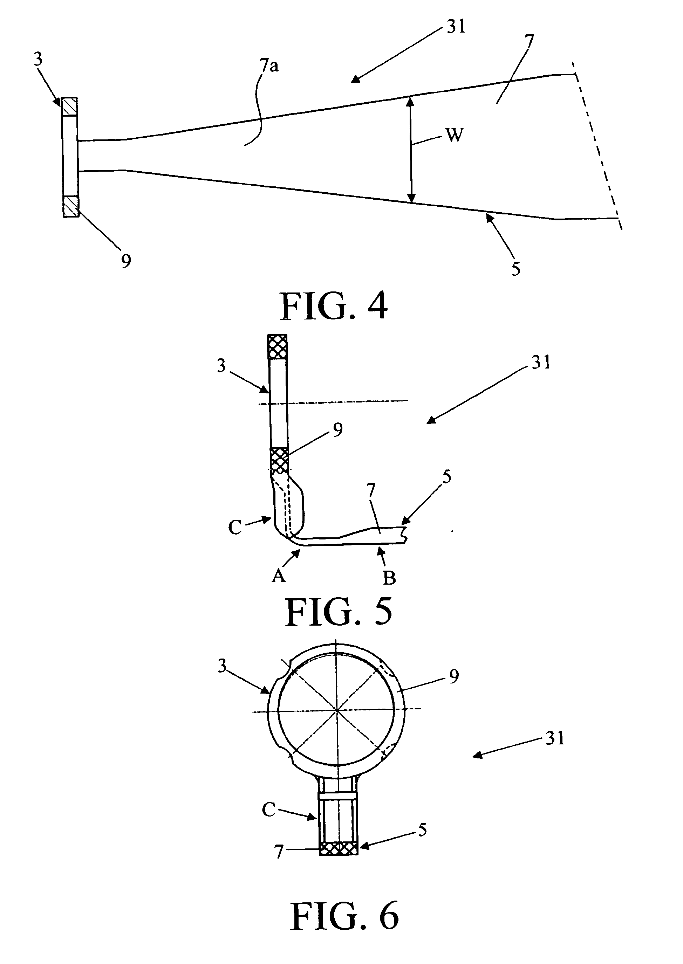

In figures 4, 5 and 6 the supporting arm 5 and the axle carrier 3 which are one piece 31 are shown in detail in a view from above, a cross-section and a side view respectively. Between the plate 9 of the axle carrier 3 and the leaf spring 7 of the supporting arm 5 (indicated by A) the part 31 can be made thinner there than the adjoining parts by that spot (indicated by B and C). At C the part 31 has the shape of an I-section in order to be extra rigid with regard to bending and at the same time weak with regard to torsion, in order to make steering, for example, possible. This shape may also be an H- or U- section or any other section which is weak with regard to torsion.

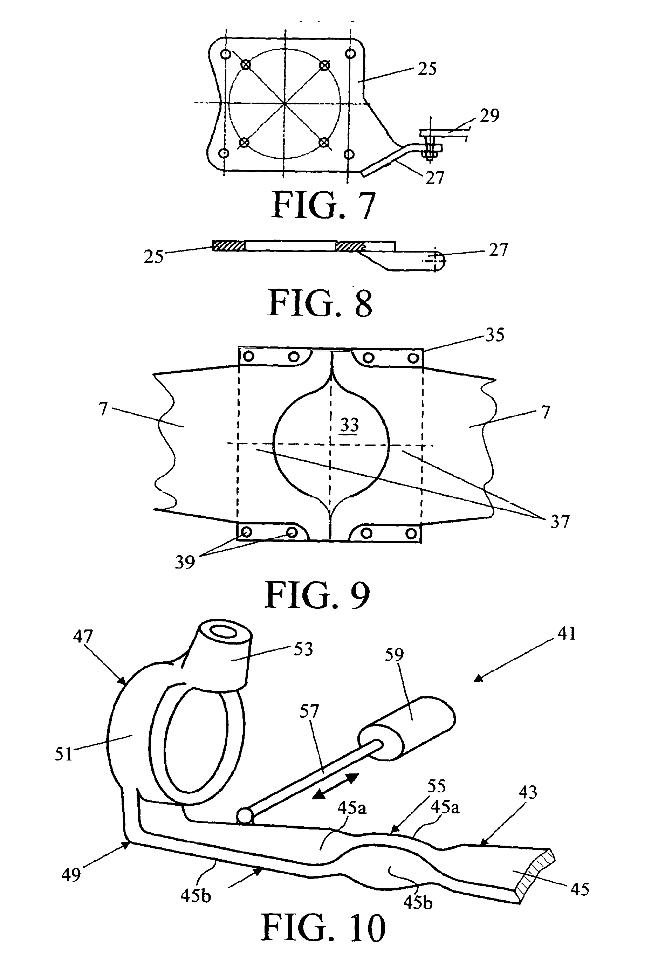

In figures 7 and 8 the stub axle plate 25 is shown in detail in a side view and horizontal cross-section respectively. The arm 27 forms a unit with the stub axle plate 25 and the steering rod 29 is attached to the free end of the arm 27 in such a way that it can turn.

In figure 9 an embodiment of the attachment of the leaf spring 7 to a vehicle is shown in detail. The vehicle's left and right wheels are connected to the body or a subframe of the vehicle by means of a wheel suspension system described above. The leaf springs 7 of the wheel suspension system are attached to a mounting face 33 of a locking piece 35 of the body or subframe, in which the ends 37 of the leaf springs 7 are clamped between the mounting face 33 and an additional surface of an additional locking piece 35, not shown, that is situated above the ends 37 shown here. The locking piece 35 and the additional locking piece are connected to each other by means of bolts 39. Because of this, there is a clamped joint which has the advantage that the leaf spring's fibres are not broken off.

In figure 10 a second embodiment of the wheel suspension system according to the invention is shown. This wheel suspension system 41 also has a supporting arm 43 made up of a leaf spring 45 and an axle carrier 47 which are one piece 49. The axle carrier 47 has a hub 51 in which bearings can be placed for supporting an axle. The part 49 is not made thinner between the hub 51 and the leaf spring 45. The mounting piece 53 for the shock absorber of the guide is a part of the part 49 and forms a complete unit along with the axle carrier 47 and the leaf spring 45.

The main surfaces 45a, 45b of a part 55 of the leaf spring 45 are at an angle with respect to the main surfaces 45a, 45b of the rest of the leaf spring 45. Because of this, the leaf spring 45 is flexible in two directions. A rod 57 is attached so that it can hinge to the leaf spring 45. The rod 57 can move lengthwise, for example, by means of a solenoid 59 attached to a vehicle's body or (sub)frame, in order to realize the active steering of the wheel.

Although in the above the invention is explained on the basis of the drawings, it should be noted that the invention is in no way limited to the embodiments shown in the drawings. The invention also extends to all embodiments deviating from the embodiments shown in the drawings within the context defined by the claims.

## Claims

1. Wheel suspension system (1; 41) for a vehicle, comprising a supporting arm (5; 43) comprising a leaf spring (7; 45) which, if the wheel suspension system is built in a vehicle, is provided with a top and a bottom main surface (7a, 7b: 45a, 45b), an axle carrier (3; 47) made from one piece together with the leaf spring and situated on the side of the top main surface (7a; 45a) at an angle with respect to the top main surface, which wheel suspension system, furthermore, comprises a guide (11), which is attached to the axle carrier and is situated on the side of the leaf spring's top main surface (7a; 45a) at an angle with respect to the top main surface and at a distance vertically from where the axle carrier is attached to the leaf spring, whereby the flexibility of the leaf spring and axle carrier which are one piece is greater at at least one spot in at least one direction than it is at the parts adjoining that spot, **characterized in that** the flexibility of the above-mentioned part has a different value in various directions at the above-mentioned spot.

2. Wheel suspension system (1; 41) according to claim 1, **characterized in that** the above-mentioned part is strong with respect to bending and weak with respect to torsion at the above-mentioned spot.

3. Wheel suspension system (1; 41) according to claim 1 or 2, **characterized in that** the leaf spring's cross-section varies in shape over its length in order to be able to adjust its properties at particular spots.

4. Wheel suspension system (1) according to claim 3, **characterized in that** at and/or near where the axle carrier (3) is attached to the leaf spring (7), that part is thinner than the adjoining parts by that spot.

5. Wheel suspension system (1) according to one of the preceding claims, **characterized in that** the axle carrier comprises a plate (9) and the guide (11) and the plate are at angles of 45° to 90° with respect to the leaf spring's main surfaces (7a, 7b).

6. Wheel suspension system (1; 41) according to one of the preceding claims, **characterized in that** supporting arm (5; 43) is at an angle of less than 45° with respect to the axle.

7. Wheel suspension system (41) according to one of the preceding claims, **characterized in that** a part of the leaf spring's main surfaces (45a, 45b) is at an angle with respect to the rest of its main surfaces in order to provide flexibility in a different direction.

8. Wheel suspension system (1; 41) according to one of the preceding claims, **characterized in that** the width of the supporting arm (5; 43) varies over its length.

9. Wheel suspension system (1; 41) according to claim 8, **characterized in that** the width of the supporting arm (5; 43) increases starting from the axle carrier (3; 47).

10. Wheel suspension system (41) according to one of the preceding claims, **characterized in that** the axle carrier (47), furthermore, comprises a mounting piece (53) for attaching an additional part, for example, the guide of the wheel suspension system to the axle carrier, which mounting piece is one piece along with the axle carrier and the leaf spring (45).

11. Wheel suspension system (41) according to one of the preceding claims, **characterized in that** a steering rod (57) is connected to the axle carrier (47).

12. Vehicle provided with a wheel suspension system (1; 41) according to one of the preceding claims.

13. Vehicle according to claim 12, **characterized in that** the leaf spring (7), on a main surface (7a) at the end opposite the axle carrier (3), is attached to a mounting face (33) on the vehicle's body or subframe.

## Patentansprüche

1. Radaufhängung (1;41) für ein Fahrzeug, die einen Aufhängungsarm (5;43) umfasst, der eine Blattfeder (7;45) umfasst, die - falls die Radaufhängung in ein Fahrzeug eingebaut ist - mit einer obersten und einer untersten Hauptebene (7a,7b;45a,45b) versehen ist, sowie einen Radachsträger (3; 47), der zusammen mit der Blattfeder aus einem Stück gefertigt und an der Seite der obersten Hauptebene (7a;45a) unter einem Winkel zur obersten Hauptebene angebracht ist, wobei die Radaufhängung zudem eine Geradführung (11) umfasst, die mit dem Radachsträger verbunden und an der Seite der obersten Hauptebene (7a;45a) unter einem Winkel zur obersten Hauptebene und in einem vertikalen Abstand angebracht ist, von wo aus der Radachsträger mit der Blattfeder verbunden ist, wobei die aus einem Stück bestehende Verbindung von Blattfeder und Radachsträger zumindest an einer Stelle und zumindest in einer Richtung eine größere Flexibilität aufweist als bei den angrenzenden Teilen, **dadurch gekennzeichnet, dass** die Flexibilität des betreffenden Teils an der genannten Stelle in verschiedene Richtungen einen anderen Wert hat.

2. Radaufhängung (1;41) nach Anspruch 1, **dadurch gekennzeichnet, dass** der betreffende Teil an der genannten Stelle biegefest und torsionsschwach ist.

3. Radaufhängung (1;41) nach Anspruch 1 oder 2, **dadurch gekennzeichnet, dass** der Längsdurchmesser der Blattfeder in der Form verschieden ist, um stellenweise die Eigenschaften anpassen zu können.

4. Radaufhängung (1) nach Anspruch 3, **dadurch gekennzeichnet, dass** der entsprechende Teil bei und/oder in der Nähe der Befestigung des Radachsträgers (3) an der Blattfeder (7) dünner als bei den angrenzenden Teilen ist.

5. Radaufhängung (1) nach einem der vorangegangenen Ansprüche, **dadurch gekennzeichnet, dass** der Radachsträger eine Platte (9) umfasst und die Geradführung (11) sowie die Platte gegenüber den Hauptebenen (7a,7b) der Blattfeder unter Winkeln von 45 bis 90° stehen.

6. Radaufhängung (1;41) nach einem der vorangegangenen Ansprüche, **dadurch gekennzeichnet, dass** der Aufhängungsarm (5;43) gegenüber der Radachse unter einem Winkel von kleiner als 45° steht.

7. Radaufhängung (41) nach einem der vorangegangenen Ansprüche, **dadurch gekennzeichnet, dass** von einem Teil der Blattfeder die Hauptebenen unter einem Winkel zu den übrigen Hauptebenen (45a,45b) für die Flexibilität in eine andere Richtung stehen.

8. Radaufhängung (1;41) nach einem der vorangegangenen Ansprüche, **dadurch gekennzeichnet, dass** die Breite des Aufhängungsarms in Längsrichtung des Aufhängungsarms (5;43) variiert.

9. Radaufhängung (1;41) nach Anspruch 8, **dadurch gekennzeichnet, dass** die Breite des Aufhängungsarms (5;43) ab dem Radachsträger (3;47) zunimmt.

10. Radaufhängung (41) nach einem der vorangegangenen Ansprüche, **dadurch gekennzeichnet, dass** der Radachsträger (47) zudem ein Befestigungsteil (53) umfasst für die Befestigung eines weiteren Teils der Radaufhängung an dem Radachsträger, z.B. die Geradführung, wobei das Befestigungsteil zusammen mit dem Radachsträger und der Blattfeder (45) ein einziges Teil bildet.

11. Radaufhängung (41) nach einem der vorangegangenen Ansprüche, **dadurch gekennzeichnet, dass** eine Lenkstange (57) mit dem Radachsträger (47) verbunden ist.

12. Fahrzeug mit einer Radaufhängung (1;41) nach einem der vorangegangenen Ansprüche.

13. Fahrzeug nach Anspruch 12, **dadurch gekennzeichnet, dass** die Blattfeder (7) am gegenüber dem Radachsträger (3) befindlichen Ende mit einer Hauptebene (7a) an einer Montagefläche (33) einer Karosserie oder eines Hilfsrahmens des Fahrzeugs befestigt ist.

## Revendications

1. Suspension de roue (1;41) destinée à un véhicule, comprenant un bras de support (5;43), qui comprend un ressort à lames (7;45) qui, si la suspension de roue est intégrée dans un véhicule, est doté d'un plan principal supérieur et inférieur (7a,7b;45a,45b), un support d'essieu (3; 47) qui, conjointement avec le ressort à lames, forme un tout et est présent sur le côté du plan principal supérieur (7a;45a), moyennant un angle par rapport au plan principal supérieur, laquelle suspension de roue comprend également un guide rectiligne (11) qui est relié au support d'essieu et qui est présent sur le côté du plan principal supérieur (7a;45a), moyennant un angle par rapport au plan principal supérieur et, à une distance verticale d'où le support d'essieu est relié au ressort à lames, le ressort à lames et le support d'essieu existants et d'une seule pièce présentant une plus grande flexibilité, à au moins un endroit et dans au moins une direction, qu'au niveau des parties adjacentes, **caractérisée en ce que** la flexibilité de ladite partie à l'endroit visé présente une autre valeur dans différentes directions.

2. Suspension de roue (1;41) selon la revendication 1, **caractérisée en ce que**, à l'endroit visé, la partie visée résiste à la flexion et est souple en torsion.

3. Suspension de roue (1;41) selon la revendication 1 ou 2, **caractérisée en ce que** la section du ressort à lames varie en forme sur la longueur afin de pouvoir adapter localement les propriétés.

4. Suspension de roue (1) selon la revendication 3, **caractérisée en ce que**, au niveau de la fixation du support d'essieu (3) au ressort à lames (7), et/ou à proximité, la partie est plus mince qu'au niveau des parties adjacentes.

5. Suspension de roue (1) selon une des revendications précédentes, **caractérisée en ce que** le support d'essieu comprend une plaque (9) et **en ce que** le guide rectiligne (11) et la plaque se trouvent sous des angles de 45 à 90° par rapport aux plans principaux (7a,7b) du ressort à lames.

6. Suspension de roue (1;41) selon une des revendications précédentes, **caractérisée en ce que** le bras de support (5;43) est placé moyennant un angle inférieur à 45° par rapport à l'essieu.

7. Suspension de roue (41) selon une des revendications précédentes, **caractérisée en ce que** les plans principaux d'une partie du ressort à lames se trouvent sous un angle par rapport au reste des plans principaux (45a,45b) à des fins de flexibilité dans une autre direction.

8. Suspension de roue (1;41) selon une des revendications précédentes, **caractérisée en ce que** la largeur du bras de support varie dans le sens longitudinal du bras de support (5;43).

9. Suspension de roue (1;41) selon la revendication 8, **caractérisée en ce que** la largeur du bras de support (5;43) augmente à partir du support d'essieu (3;47).

10. Suspension de roue (41) selon une des revendications précédentes, **caractérisée en ce que** le support d'essieu (47) comprend également une partie de fixation (53) destinée à la fixation d'une autre partie, par exemple le guide rectiligne, de la fixation de roue, au support d'essieu, laquelle partie de fixation constitue une seule partie conjointement avec le support d'essieu et le ressort à lames (45).

11. Suspension de roue (41) selon une des revendications précédentes, **caractérisée en ce qu'**une barre de direction (57) est reliée au support d'essieu (47).

12. Véhicule doté d'une suspension de roue (1;41) selon une des revendications précédentes.

13. Véhicule selon la revendication 12, **caractérisé en ce que** le ressort à lames (7) est fixé, à l'extrémité présente du côté opposé au support d'essieu (3) avec un plan principal (7a), sur un plan de montage (33) d'une carrosserie ou d'un sous-châssis du véhicule.
